# EUROPEAN PATENT APPLICATION

(11) **EP 3 401 862 A1**
(43) Date of publication of application: **14.11.2018**
(21) Application number: 16883443.0
(22) Date of filing: 27.12.2016
(51) Int. Cl.: G06Q 20/10

(54) **DATA STORAGE AND SERVICE PROCESSING METHOD AND DEVICE**

(30) Priority: 06.01.2016 CN 201610007367
(71) Applicant: Alibaba Group Holding Limited, Grand Cayman (KY)
(72) Inventor: YU, Lingguang, Hangzhou 310099 (CN)
(74) Representative: Conroy, John
(86) International application number: PCT/CN2016/112297
(87) International publication number: WO 2017/118318

(57) **Abstract**

The present application discloses a data storage and service processing method and apparatus. In the method, during data storage, data of each user is obtained, the data of the user is divided into a plurality of data sets, and the plurality of data sets are separately stored on at least two servers. When processing a service based on stored data, a server receives a service processing request that includes a user identifier and a data identifier of data needed by the service, determines whether there is the data corresponding to the data identifier in locally stored data corresponding to the user identifier, and if yes, obtains the locally stored data corresponding to the data identifier, and executes the service based on the obtained data, or if no, obtains the data corresponding to the data identifier from another server, and executes the service based on the obtained data. In the method, even if a certain server is faulty, a user can still execute a service by using data stored on another server.

## Description

The present application claims priority to Chinese Patent Application No. 201610007367.5, filed on January 6, 2016 and entitled "Data Storage and Service Processing Method and Apparatus", which is incorporated herein by reference in its entirety.

### TECHNICAL FIELD

The present application relates to the field of computer technologies, and in particular, to a data storage and service processing method and apparatus.

### BACKGROUND

With the development of network technologies, a server can provide more diversified services for a user. For example, the server can provide a historical chat record query service for the user.

Currently, the data of a user needs to be stored on a server before the server provides a service for the user. In the existing technology, the server usually groups users into N (N is a positive integer) groups based on user IDs, and stores data corresponding to users in each group on different servers. After the server receives a service processing request including a user ID that is sent by a user, the server is first searched for data corresponding to the user ID. If there is data corresponding to the user ID, the data corresponding to the user ID is directly obtained, and a service is executed based on the obtained data. If there is no data corresponding to the user ID, the service processing request is sent to another server, and the another server executes a service based on the data corresponding to the user ID.

For example, the server groups nine users into three groups based on user IDs, and each group includes three users. Historical chat records corresponding to three users in the first group are stored on server 1, historical chat records corresponding to three users in the second group are stored on server 2, and historical chat records corresponding to three users in the third group are stored on server 3. When server 1 receives a chat record query service request including a user ID that is sent by a user, server 1 is searched for a historical chat record corresponding to the user ID. If the historical chat record is identified, the identified historical chat record is directly returned to the user. If the historical chat record is not identified, the chat record query service request is sent to server 2 and/or server 3, and server 2 and/or server 3 are/is searched for the historical chat record corresponding to the user ID.

However, in the existing technology, if one or several servers are faulty, data stored on the server cannot be accessed. In other words, some users cannot normally execute services in this situation.

### SUMMARY

Implementations of the present application provide a data storage and service processing method and apparatus, so as to resolve a problem in the existing technology that when one or more servers are faulty, some users cannot normally execute services.

An implementation of the present application provides a service processing method, where data of each user is separately stored on at least two servers, and the method includes: receiving, by a server, a service processing request, where the service processing request includes a user identifier and a data identifier of data needed by a service; determining whether there is the data corresponding to the data identifier in data corresponding to the user identifier that is locally stored on the server; and if yes, obtaining the locally stored data corresponding to the data identifier, and executing the service based on the obtained data; or if no, obtaining the data corresponding to the data identifier from another server, and executing the service based on the obtained data.

An implementation of the present application provides a service processing method, where a total balance of each user is divided into a plurality of sub-balances, and the plurality of sub-balances are separately stored on at least two servers, and the method includes: receiving, by a server, a service processing request, where the service processing request includes a user identifier and an amount of money needed by a service; determining whether a balance amount of a sub-balance corresponding to the user identifier that is locally stored on the server is not less than the amount of money; and if yes, obtaining a locally stored sub-balance with the amount of money, and executing the service based on the obtained sub-balance; or if no, obtaining sub-balances totaling the amount of money from the server and another server, and executing the service based on the obtained sub-balances.

An implementation of the present application provides a data storage method, where the method includes: obtaining data of each user; dividing the data of the user into a plurality of data sets with the same data volume; and separately storing the plurality of data sets on at least two servers, and storing, on each server, a user identifier of the user, a total data volume of the data of the user, a server identifier of each server, and a data volume of a data set stored on each server.

An implementation of the present application provides a data storage method, where the method includes: obtaining a total balance of each user; equally dividing the total balance of the user into a plurality of sub-balances; and separately storing the plurality of sub-balances on at least two servers, and storing, on each server, a user identifier of the user, the total balance of the user, a server identifier of each server, and a balance amount of a sub-balance stored on each server.

An implementation of the present application provides a service processing apparatus, where data of each user is separately stored on at least two servers, and the apparatus includes: a receiving module, configured to receive a service processing request, where the service processing request includes a user identifier and a data identifier of data needed by a service; a determining module, configured to determine whether there is the data corresponding to the data identifier in data corresponding to the user identifier that is locally stored on the apparatus; and an execution module, configured to: when a determining result of the determining module is yes, obtain the locally stored data corresponding to the data identifier, and execute the service based on the obtained data; or when a determining result of the determining module is no, obtain the data corresponding to the data identifier from another server, and execute the service based on the obtained data.

An implementation of the present application provides a service processing apparatus, where a total balance of each user is divided into a plurality of sub-balances, and the plurality of sub-balances are separately stored on at least two servers, and the apparatus includes: a receiving module, configured to receive a service processing request, where the service processing request includes a user identifier and an amount of money needed by a service; a determining module, configured to determine whether a balance amount of a sub-balance corresponding to the user identifier that is locally stored on the apparatus is not less than the amount of money; and an execution module, configured to: when a determining result of the determining module is yes, obtain a locally stored sub-balance with the amount of money, and execute the service based on the obtained sub-balance; or when a determining result of the determining module is no, obtain sub-balances totaling the amount of money from the apparatus and another server, and execute the service based on the obtained sub-balances.

An implementation of the present application provides a data storage apparatus, where the apparatus includes: an acquisition module, configured to obtain data of each user; a division module, configured to divide the data of the user into a plurality of data sets with the same data volume; and a storage module, configured to separately store the plurality of data sets on at least two servers, and store, on each server, a user identifier of the user, a total data volume of the data of the user, a server identifier of each server, and a data volume of a data set stored on each server.

An implementation of the present application provides a data storage apparatus, where the apparatus includes: an acquisition module, configured to obtain a total balance of each user; a division module, configured to equally divide the total balance of the user into a plurality of sub-balances; and a storage module, configured to separately store the plurality of sub-balances on at least two servers, and store, on each server, a user identifier of the user, the total balance of the user, a server identifier of each server, and a balance amount of a sub-balance stored on each server.

The implementations of the present application provide a data storage and service processing method and apparatus. In the method, during data storage, data of each user is obtained, the data of the user is divided into a plurality of data sets, and the plurality of data sets are separately stored on at least two servers. When processing a service based on stored data, a server receives a service processing request that includes a user identifier and a data identifier of data needed by the service, determines whether there is the data corresponding to the data identifier in locally stored data corresponding to the user identifier, and if yes, obtains the locally stored data corresponding to the data identifier, and executes the service based on the obtained data, or if no, obtains the data corresponding to the data identifier from another server, and executes the service based on the obtained data. In the method, even if a certain server is faulty, a user can still execute a service by using data stored on another server.

### BRIEF DESCRIPTION OF DRAWINGS

The accompanying drawings described here are used to provide a further understanding of the present application, and constitute a part of the present application. The illustrative implementations of the present application and descriptions of the implementations are used to describe the present application, and do not limit the present application. In the accompanying drawings:
FIG. 1 illustrates a data storage process, according to an implementation of the present application.
FIG. 2A is a schematic diagram illustrating a first data storage system, according to an implementation of the present application.
FIG. 2B is a schematic diagram illustrating a second data storage system, according to an implementation of the present application.
FIG. 3 illustrates a service processing process, according to an implementation of the present application.
FIG. 4 illustrates a balance storage process, according to an implementation of the present application.
FIG. 5 illustrates a payment processing process, according to an implementation of the present application.
FIG. 6 is a schematic structural diagram illustrating a data storage apparatus, according to an implementation of the present application.
FIG. 7 is a schematic structural diagram illustrating a service processing apparatus, according to an implementation of the present application.
FIG. 8 is a schematic structural diagram illustrating a balance storage apparatus, according to an implementation of the present application.
FIG. 9 is a schematic structural diagram illustrating a payment processing apparatus, according to an implementation of the present application.

### DESCRIPTION OF IMPLEMENTATIONS

To illustrate the objectives, technical solutions, and advantages of the present application, the following clearly and completely describes the technical solutions of the present application with reference to the implementations of the present application and corresponding accompanying drawings. Apparently, the described implementations are merely some, but not all of the implementations of the present application. All other implementations obtained by a person of ordinary skill in the art based on the implementations of the present application without creative efforts shall fall within the protection scope of the present application.

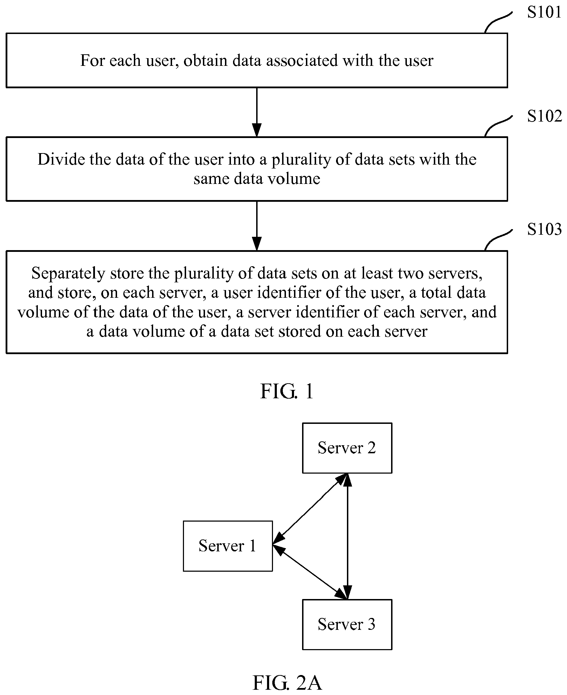

FIG. 1 illustrates a data storage process, according to an implementation of the present application. The process includes the following steps:

S 101. For each user, obtain data associated with the user.

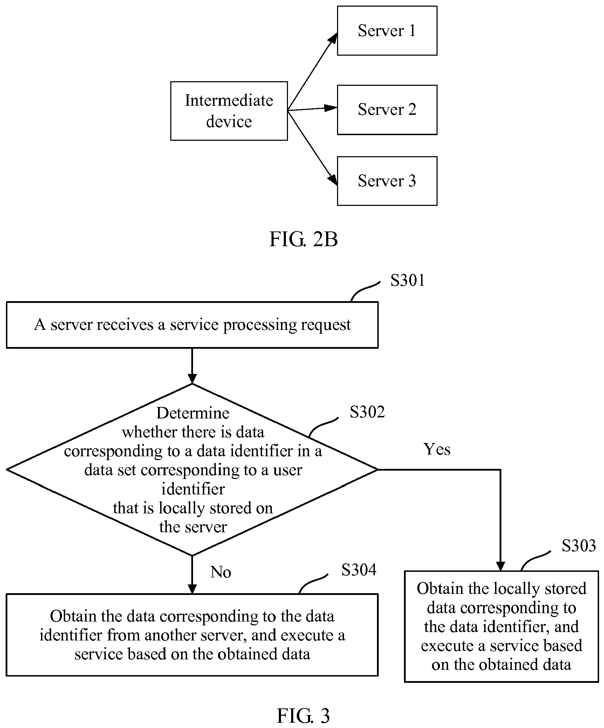

In the implementation of the present application, an entire data storage system can be shown in FIG. 2A. In the system, the user data is stored in at least two servers, and any one of the at least two servers can perform S101 to S103. Further, the entire data storage system can be shown in FIG. 2B. In the system, the user data is stored in at least two servers, and an intermediate device rather than the at least two servers can perform steps S101 to S103. The following descriptions use the intermediate device shown in FIG. 2B that performs steps S101 to S103 as an example.

In actual application, before a server provides a service for a user, data of the user needs to be stored on the server. Therefore, in the present application, the intermediate device first obtains the data of each user.

For example, assume that the server can provide a historical chat record query service for user A. The intermediate device first obtains a historical chat record (data) of user A.

S102. Divide the data of the user into a plurality of data sets with the same data volume.

In the implementation of the present application, because any data usually includes a data volume as a data attribute, the intermediate device can divide the obtained data of the user into the plurality of data sets based on a data volume. During subsequent service processing, because a service processing request sent by the user can be sent to any server, and each server can obtain data needed for service processing from a locally stored data set, after the data of the user is divided based on the data volume, the obtained data sets have the same data volume.

Certainly, the present application also provides another division method. After any two data sets are obtained through division, the difference between data volumes of the two data sets is less than or equal to a predetermined threshold. The threshold can be set based on an actual situation.

In addition, it is also worthwhile to note that the number of data sets obtained through division can be determined based on the number of servers that are to store the data of the user. The number of data sets obtained through division is not less than the number of servers that are to store the data of the user.

Continuing with the previous example, assume that user A has 99 historical chat records, there are three servers in total, and data of the user is divided into a plurality of data sets with the same data volume. As such, the intermediate device can divide the historical chat records of user A into data set 1, data set 2, and data set 3 that include 33 historical chat records each.

S103. Separately store the plurality of data sets on at least two servers, and store, on each server, a user identifier of the user, a total data volume of the data of the user, a server identifier of each server, and a data volume of a data set stored on each server.

In the implementation of the present application, after the intermediate device divides the data of the user into the plurality of data sets, the intermediate device can send the plurality of data sets that are to be stored to at least two servers separately. Each server stores at least one data set.

To help subsequently search the at least two servers for the data of the user, and execute a service based on the identified data of the user, in the present application, in addition to locally saving a data set in a server, the server further needs to store the user identifier of the user, the total data volume of the data of the user, the server identifier of each server, and the data volume of the data set stored on each server. There is a mapping relationship between the server identifier of each server and the data volume of the data set stored on the server. In other words, the data volume of the data set stored on each server can be known from the mapping relationship.

Continuing with the previous example, in addition to data set 1 that includes 33 historical chat records, server 1 can store data shown in Table 1:

**Table 1**

| **Data name** | **Data value** |
|---|---|
| User identifier | User A |
| Total data volume of data of the user | 99 historical chat records |
| Identifier of server 1 | Server 1 |
| Identifier of server 2 | Server 2 |
| Identifier of server 3 | Server 3 |
| Data volume of data set 2 stored on server 2 | 33 historical chat records |
| Data volume of data set 3 stored on server 3 | 33 historical chat records |

The data shown in Table 1 can be sent by the intermediate device to each server and stored on the server.

In the method, even if a certain server is faulty, a user can still execute a service by using data stored on another server.

In addition, when steps S101 to S103 shown in FIG. 1 are performed by any server shown in FIG. 2A, the server can obtain data of the user, divide the data of the user into a plurality of data sets, then store at least one data set, and eventually distribute other data sets to other servers for storage. Meanwhile, the server can locally store the user identifier of the user, the total data volume of the data of the user, the server identifier of each server, and the data volume of the data set stored on each server, and then send the data to the other servers for storage.

In the implementation of the present application, after the data of the user is stored by using steps S101 to S103, the server can execute a service based on data stored on different servers. An entire service processing process is shown in FIG. 3.

FIG. 3 illustrates a service processing process, according to an implementation of the present application. The process includes the following steps:

S301. A server receives a service processing request.

In the implementation of the present application, because data of a user is stored separately on different servers, the service processing request sent by the user by using a terminal is sent to any one of a plurality of servers. The service processing request includes a user identifier and a data identifier of data needed by a service, to notify the server which user and data associated with the user need to be processed.

S302. Determine whether there is data corresponding to the data identifier in a data set corresponding to the user identifier that is locally stored on the server. If yes, perform step S303, or if no, perform step S304.

In the implementation of the present application, after receiving the service processing request sent by the user, the server determines data sets corresponding to the user based on the user identifier included in the service processing request, and determines, based on the data identifier included in the service processing request, data sets needed for executing the service. If a data set stored on the server includes the data corresponding to the data identifier, in other words, there is the data set needed for executing the service, step S303 is performed. If the data set stored on the server does not include the data corresponding to the data identifier, step S304 is performed.

S303. Obtain the locally stored data corresponding to the data identifier, and execute a service based on the obtained data.

S304. Obtain the data corresponding to the data identifier from another server, and execute a service based on the obtained data.

In the implementation of the present application, after determining that there is no data corresponding to the data identifier that is locally stored on the server, the server can directly send a data acquisition request to the another server, to obtain the data corresponding to the data identifier from the another server, and execute the service based on the obtained data. The data acquisition request includes the user identifier and the data identifier.

In the previously described method, when a certain server is faulty, data of the user stored on the server cannot be used, but data of the user stored on another server can still be used, and data needed for executing a service is probably stored on the another server. As such, the service can still be successfully executed. In the existing technology, if a server that stores the data of the user is faulty, the service cannot be executed. Compared with the existing technology, the method greatly improves the possibility that a service is executed.

In actual application, a server can execute a service based on a data volume of the corresponding data. Therefore, the data identifier, included in the service processing request, of the data needed by the service can be a data volume of the data needed by the service. Then, the server determines, based on the data volume that is included in the service processing request of the data needed by the service, whether a data volume of the data corresponding to the user identifier that is locally stored on the server is not less than the data volume of the data needed by the service. If yes, the server determines that there is the data corresponding to the data identifier on the server. If no, the server determines that there is no data corresponding to the data identifier on the server.

Further, because the data of the user is not only stored on the previously described server but also on another server, in the present application, if there is no data corresponding to the data identifier on the server, in other words, the data volume of the data corresponding to the user identifier that is locally stored on the server is less than the data volume of the data needed by the service, the data corresponding to the data identifier can be obtained from the another server. A difference between the data volume of the data needed by the service and the data volume of the data corresponding to the user identifier that is locally stored on the server can be determined, and data corresponding to the user identifier and with a data volume being the difference is obtained from the another server.

In addition, the present application provides an implementation of obtaining the data corresponding to the user identifier and with a data volume being the difference from the another server: data corresponding to the user identifier that is stored on other servers is sequentially obtained in descending order of data volumes of the data, until an obtained data volume is the difference.

In actual application, a sum of the data volumes of the data corresponding to the user identifier that is stored on the other servers may be less than the determined difference. Therefore, in the present application, before obtaining the data corresponding to the user identifier and with a data volume being the difference from the another server, the server can first determine whether a sum of data volumes of data corresponding to the user identifier that is stored on all the servers is not less than the data volume of the data needed by the service. If yes, the server can obtain the data from the another server. If no, it indicates that the data volume of the user is insufficient to execute the service, and the server can directly refuse to execute the service.

Eventually, after processing the service based on the obtained data, the server needs to update the data volume of the locally stored data corresponding to the user identifier. In other words, the server updates the total data volume of the data corresponding to the user identifier, the data volume of the locally stored data corresponding to the user identifier, and the data volumes of the data corresponding to the user identifier that is stored on the other servers. When the data volume of the data corresponding to the user identifier that is locally stored on the server is less than the data volume included in the service request sent by the user, a data volume of data corresponding to the user identifier is obtained from the another server. As such, when updating the data volume of the locally stored data corresponding to the user identifier, the server also needs to send an update request to the another server, so that the another server updates locally stored data based on the total data volume of the data corresponding to the user identifier, the data volume of the locally stored data corresponding to the user identifier, and the data volumes of the data corresponding to the user identifier that is stored on the other servers.

It is worthwhile to note here that servers in the previous service processing are servers that run normally. If a certain server is faulty, the server cannot receive a service processing request sent by the user or a data acquisition request sent by another server to the server. In other words, a server that receives the service processing request can monitor whether another server is faulty, and can obtain data from another server that is not faulty.

In the previously described service processing method provided in the implementation of the present application, in actual application, when executing a service related to money such as payment and transfer, the server needs to execute the service based on an amount of the money (that is, a data volume of data). Therefore, to more clearly describe the data storage method and the service processing method in the present solutions, data is an account balance in the following descriptions.

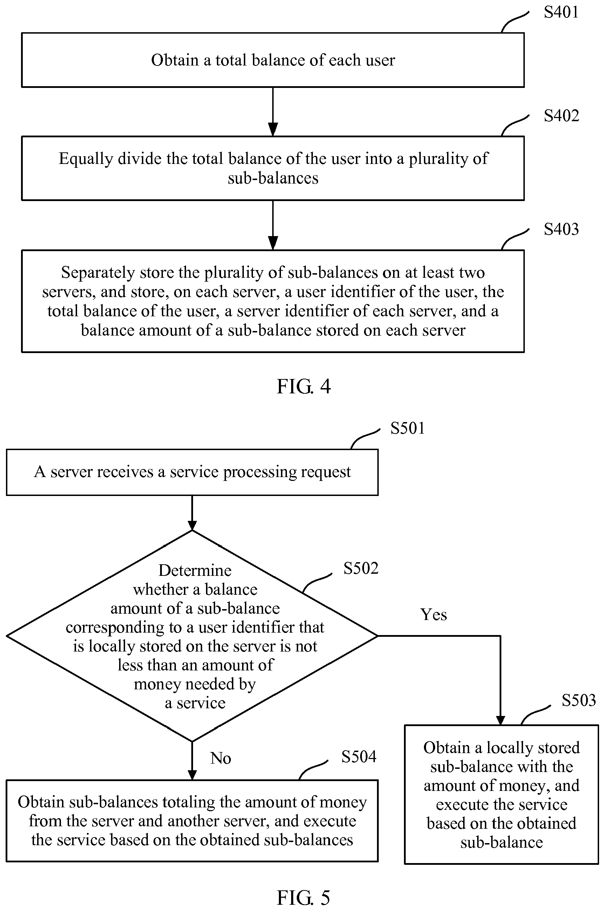

FIG. 4 illustrates a balance storage process, according to an implementation of the present application. The process includes the following steps:

S401. Obtain a total balance of each user.

In actual application, it is increasingly popular for a user to execute services such as purchase and payment by using a balance in a payment account. Before a service is executed by using the balance, the balance of the user needs to be first stored on a server. As such, in the present application, the server first obtains the total balance of each user.

For example, assume that the server provides a balance payment service for user A. An intermediate device first obtains a total balance 300 RMB of user A.

S402. Equally divide the total balance of the user into a plurality of sub-balances.

Continuing with the previous example, assume that the total balance is equally divided, and there are three servers to store the balance of user A. As such, the intermediate device can equally divide the total balance of user A into three sub-balances. To be specific, sub-balance 1 is 100 RMB, sub-balance 2 is 100 RMB, and sub-balance 3 is 100 RMB.

S403. Separately store the plurality of sub-balances on at least two servers, and store, on each server, a user identifier of the user, the total balance of the user, a server identifier of each server, and a balance amount of a sub-balance stored on each server.

In the implementation of the present application, to help subsequently search the at least two servers for the sub-balances of the user, and execute a payment service based on the identified sub-balances of the user, not only the plurality of sub-balances can be separately stored on the at least two servers, but also the user identifier of the user, the total balance of the user, the server identifier of each server, and the balance amount of the sub-balance stored on each server can be stored on the servers, and the locally stored data is sent to another server, so that the another server stores the data.

Continuing with the previous example, in addition to sub-balance 1 with a balance amount of 100 RMB, server 1 can store data shown in Table 2:

**Table 2**

| **Data name** | **Data value** |
|---|---|
| User identifier | User A |
| Total balance of the user | 300 RMB |
| Identifier of server 1 | Server 1 |
| Identifier of server 2 | Server 2 |
| Identifier of server 3 | Server 3 |
| Balance amount of sub-balance 2 stored on server 2 | 100 RMB |
| Balance amount of sub-balance 3 stored on server 3 | 100 RMB |

The data shown in Table 2 can be sent by the intermediate device to each server and stored on the server.

In the method, even if a certain server is faulty, a user can still process a payment service by using a sub-balance stored on another server.

In the implementation of the present application, after the total balance of the user is stored by using steps S401 to S403, the server can execute a payment service based on sub-balances of the user that are stored on different servers. An entire payment processing process is shown in FIG. 5.

FIG. 5 illustrates a payment processing process, according to an implementation of the present application. The process includes the following steps:

S501. A server receives a service processing request.

In the implementation of the present application, the service processing request includes a user identifier and an amount of money needed by a service, to notify the server of a user who needs to be paid and an amount of money needed for the execution.

Continuing with the previous example, user A uses a balance payment service when purchasing an item. As such, user A sends a payment service processing request to the server by using a terminal. The payment service processing request includes a user identifier of user A and 120 RMB needed by the payment service. Assume that server 1 receives the payment service processing request.

S502. Determine whether a balance amount of a sub-balance corresponding to the user identifier that is locally stored on the server is not less than the amount of money. If yes, perform step S503, or if no, perform step S504.

Continuing with the previous example, after receiving the payment service processing request, server 1 identifies, based on the user identifier of user A, that a balance amount of locally stored sub-balance corresponding to user A is 100 RMB, and performs step S504 and subsequent processing when determining, based on 120 RMB needed by the payment service, that the balance amount of the locally stored sub-balance corresponding to user A is less than the amount of money needed by the payment service.

S503. Obtain a locally stored sub-balance with the amount of money, and execute a service based on the obtained sub-balance.

S504. Obtain sub-balances totaling the amount of money from the server and another server, and execute a service based on the obtained sub-balances.

In the implementation of the present application, when the server determines that the balance amount of the locally stored sub-balance corresponding to the user identifier is less than the amount of money needed by the service, it indicates that the locally stored sub-balance is insufficient to process the service. As such, the sub-balance corresponding to the user identifier can be obtained from the another server, and the service is processed based on sub-balances obtained from the server and the another server.

The server can determine a difference between the amount of money included in the service processing request and the balance amount of the sub-balance corresponding to the user identifier that is locally stored on the server, obtain the whole sub-balance corresponding to the user identifier that is locally stored on the server, obtain a sub-balance with a balance amount being the difference from the another server, and execute the service based on the sub-balances totaling the amount of money that are obtained from the server and the another server.

It is worthwhile to note here that the sub-balance can be obtained from another server that is not faulty.

Continuing with the previous example, assume that server 1 detects that server 3 is faulty and server 2 runs normally. As such, server 1 determines a difference between the amount 120 RMB included in the service processing request and the balance amount 100 RMB of the sub-balance corresponding to user A that is locally stored on server 1, namely, 20 RMB, sends a data acquisition request that includes the difference 20 RMB to server 2 that runs normally, and receives a balance amount 20 RMB of a sub-balance that is returned by server 2. Meanwhile, server 1 obtains the whole sub-balance 100 RMB corresponding to user A that is locally stored on server 1, and performs balance payment processing based on 100 RMB obtained from server 1 and 20 RMB obtained from server 2.

In the previously described methods, when a certain server is faulty, a sub-balance of the user stored on the server cannot be used. However, a sub-balance of the user stored on another server can still be used, and a service can be successfully executed provided that a sum of sub-balances of the user stored on servers that are not faulty is greater than an amount of money needed by the service. In the existing technology, however, usually when a server that stores a balance of the user is faulty, a payment service cannot be executed. Compared with the existing technology, the method greatly improves the possibility that the payment service is executed.

Further, the following method can be used to obtain the sub-balance with a balance amount being the difference from the another server: Sub-balances corresponding to the user identifier that are on other servers are sequentially obtained in descending order of balance amounts of the sub-balances, until an obtained balance amount is the difference.

Eventually, after processing the service based on the obtained sub-balance, the server needs to update the balance amount of the locally stored sub-balance corresponding to the user identifier. In other words, the server updates the total balance corresponding to the user identifier, the balance amount of the sub-balance corresponding to the user identifier that is locally stored on the server, and the balance amounts of the sub-balances corresponding to the user identifier that are stored on the other servers. When the balance amount of the sub-balance corresponding to the user identifier that is locally stored on the server is less than the amount of money needed by the service and included in the service request sent by the user, the server obtains a balance amount of a sub-balance corresponding to the user identifier from the another server. As such, when updating the balance amount of the locally stored sub-balance corresponding to the user identifier, the server also needs to send an update request to the another server, so that the another server updates locally stored data based on the total balance corresponding to the user identifier, the balance amount of the sub-balance corresponding to the user identifier that is locally stored on the server, and the balance amounts of the sub-balances corresponding to the user identifier that are stored on the other servers.

It is worthwhile to note here that, assume that a sum of balance amounts of sub-balances stored on all other servers other than the server that receives the service processing request is greater than the determined difference. However, if a certain server in all the other servers becomes faulty, and a sum of balance amounts of sub-balances stored on the other remaining normal servers is less than the determined difference, a payment service cannot be processed for the user. In this situation, a payment notification can be returned to the user. The payment notification is used to notify that the total balance of the user remains unchanged, the balance stored by the user cannot be used for the payment service just because a certain server is faulty, and the balance of the user can be used for the payment service after the server recovers.

For example, there are three servers in total: server 1 stores 30 RMB, server 2 stores 30 RMB, and server 3 stores 30 RMB, and a price of an item that user needs to purchase is 70 RMB. Assume that server 2 is faulty. After receiving a payment service processing request sent by the user, server 1 determines that a balance amount of a sub-balance stored on another server (namely, server 3) that runs normally is less than a determined difference (namely, 40 RMB). As such, server 1 sends a payment notification to the user, to notify user A that the total balance is still 90 RMB, the balance 90 RMB stored by the user cannot be used for a payment service only because server 2 is faulty, and the balance of the user can be used for the payment service after server 2 recovers.

In the present application, when a sub-balance locally stored on a server is insufficient, a sub-balance needs to be obtained from another server that runs normally, and a payment service is then processed based on the locally stored sub-balance and the obtained sub-balance. A transfer operation between servers is involved, and the transfer operation between the servers reduces service processing efficiency. Therefore, in the present application, whether an average balance amount of sub-balances of each user that are stored on all servers is greater than a certain threshold can be determined. If yes, the balance storage method and the payment processing method shown in FIG. 4 and FIG. 5 can be used for the user. If no, the balance storage method and the payment processing method shown in FIG. 4 and FIG. 5 cannot be used for the user.

The present application provides an implementation for determining whether a user can use the balance storage method and the payment processing method shown in FIG. 4 and FIG. 5. If an average balance amount of sub-balances of the user that are stored on all servers is greater than an average amount of money needed by the user to execute a single payment service, the user can use the balance storage method and the payment processing method shown in FIG. 4 and FIG. 5. As such, a transfer operation between servers can be effectively avoided. The average amount of money needed by the user to execute a single payment service can be determined based on an amount of money of a historical payment service of the user.

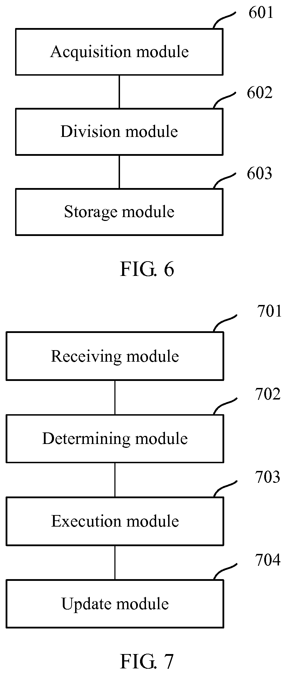

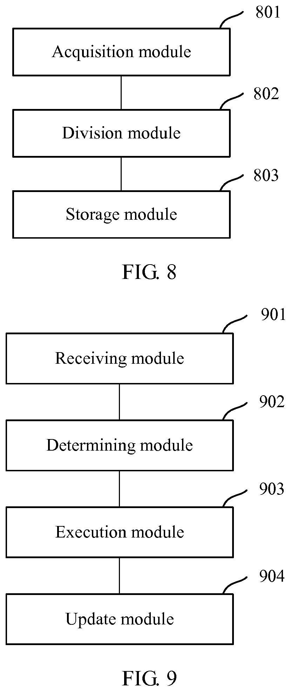

The data storage method, the service processing method, the balance storage method, and the payment processing method provided in the implementations of the present application are described above. Based on the same idea, the implementations of the present application provide four apparatuses: a data storage apparatus shown in FIG. 6, a service processing apparatus shown in FIG. 7, a balance storage apparatus shown in FIG. 8, and a payment processing apparatus shown in FIG. 9.

FIG. 6 is a schematic structural diagram illustrating a data storage apparatus, according to an implementation of the present application, and the apparatus includes:
an acquisition module 601, configured to obtain data of each user;
a division module 602, configured to divide the data of the user into a plurality of data sets with the same data volume; and
a storage module 603, configured to separately store the plurality of data sets on at least two servers, and store, on each server, a user identifier of the user, a total data volume of the data of the user, a server identifier of each server, and a data volume of a data set stored on each server.

FIG 7 is a schematic structural diagram illustrating a service processing apparatus, according to an implementation of the present application. Data of each user is separately stored on at least two servers, and the apparatus includes:
a receiving module 701, configured to receive a service processing request, where the service processing request includes a user identifier and a data identifier of data needed by a service;
a determining module 702, configured to determine whether there is the data corresponding to the data identifier in data corresponding to the user identifier that is locally stored on the apparatus; and
an execution module 703, configured to: when a determining result of the determining module 702 is yes, obtain the locally stored data corresponding to the data identifier, and execute the service based on the obtained data; or when a determining result of the determining module 702 is no, obtain the data corresponding to the data identifier from another server, and execute the service based on the obtained data.

The data identifier of the data needed by the service includes a data volume of the data needed by the service.

The determining module 702 is configured to determine whether a data volume of the data corresponding to the user identifier that is locally stored on the apparatus is not less than the data volume of the data needed by the service.

The execution module 703 is configured to: when a determining result of the determining module 702 is yes, determine that there is the data corresponding to the data identifier on the apparatus; or when a determining result of the determining module 702 is no, determine that there is no data corresponding to the data identifier on the apparatus.

The execution module 703 is configured to: determine a difference between the data volume of the data needed by the service and the data volume of the data corresponding to the user identifier that is locally stored on the apparatus, and obtain, from the another server, data corresponding to the user identifier and with a data volume being the difference.

The execution module 703 is configured to sequentially obtain data corresponding to the user identifier that is on other servers in descending order of data volumes of the data, until an obtained data volume is the difference.

The apparatus further includes: an update module 704, configured to update a total data volume of the data corresponding to the user identifier, the data volume of the data corresponding to the user identifier that is locally stored on the apparatus, and the data volumes of the data corresponding to the user identifier that is stored on the other servers.

FIG. 8 is a schematic structural diagram illustrating a balance storage apparatus, according to an implementation of the present application, and the apparatus includes:
an acquisition module 801, configured to obtain a total balance of a payment account of each user;
a division module 802, configured to equally divide the total balance of the user into a plurality of sub-balances; and
a storage module 803, configured to separately store the plurality of sub-balances on at least two servers, and store, on each server, a user identifier of the user, the total balance of the user, a server identifier of each server, and a balance amount of a sub-balance stored on each server.

FIG. 9 is a schematic structural diagram illustrating a payment processing apparatus, according to an implementation of the present application. A total balance of a payment account of each user is divided into a plurality of sub-balances, and the plurality of sub-balances are separately stored on at least two servers, and the apparatus includes:
a receiving module 901, configured to receive a service processing request, where the service processing request includes a user identifier and an amount of money needed by a service;
a determining module 902, configured to determine whether a balance amount of a sub-balance corresponding to the user identifier that is locally stored on the apparatus is not less than the amount of money; and
an execution module 903, configured to: when a determining result of the determining module 902 is yes, obtain a locally stored sub-balance with the amount of money, and execute the service based on the obtained sub-balance; or when a determining result of the determining module 902 is no, obtain sub-balances totaling the amount of money from the apparatus and another server, and execute the service based on the obtained sub-balances.

The execution module 903 is configured to: determine a difference between the amount of money and the balance amount of the sub-balance corresponding to the user identifier that is locally stored on the apparatus, obtain the whole sub-balance corresponding to the user identifier that is locally stored on the apparatus, and obtain a sub-balance with a balance amount being the difference from the another server.

The execution module 903 is configured to sequentially obtain sub-balances corresponding to the user identifier that are on other servers in descending order of balance amounts of the sub-balances, until an obtained balance amount is the difference.

The apparatus further includes: an update module 904, configured to update a total balance corresponding to the user identifier, the balance amount of the sub-balance corresponding to the user identifier that is locally stored on the apparatus, and the balance amounts of the sub-balances corresponding to the user identifier that are stored on the other servers.

In a typical configuration, a computing device includes one or more processors (CPU), an input/output interface, a network interface, and a memory.

The memory can include a non-persistent memory, a random access memory (RAM), and/or a non-volatile memory, etc. in computer readable mediums, such as a read-only memory (ROM) or a flash memory (flash RAM). The memory is an example of the computer readable medium.

The computer readable medium includes persistent, non-persistent, movable, and unmovable mediums that can store information by using any method or technology. The information can be a computer readable instruction, a data structure, a program module, or other data. Examples of a computer storage medium include, but are not limited to, a parameter random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette tape, a magnetic tape disk storage, another magnetic storage device, or any other non-transitory medium, which can be used to store information that can be accessed by the computing device. As described in the present specification, the computer readable medium does not include transitory computer readable media, for example, a modulated data signal and a carrier.

It is also worthwhile to note that the terms "include", "contain", and their other variants are intended to cover a non-exclusive inclusion, so that a process, a method, an article, or a device that includes a series of elements not only includes these elements but also includes other elements which are not expressly listed, or further includes elements inherent to such a process, method, article, or device. An element preceded by "includes a ..." does not, without more constraints, preclude the existence of additional identical elements in the process, method, article, or device that includes the element.

A person skilled in the art should understand that the implementations of the present application can be provided as a method, a system, or a computer program product. Therefore, the present application can use hardware only implementations, software only implementations, or implementations with a combination of software and hardware. Moreover, the present application can use a computer program product implemented on one or more computer usable storage mediums (including, but not limited to, a magnetic disk memory, a CD-ROM, an optical memory, etc) that include computer usable program code.

The previous descriptions are merely implementations of the present application, and are not intended to limit the present application. A person skilled in the art can make various modifications and variations to the present application. Any modification, equivalent replacement, or improvement made without departing from the spirit and principle of the present application shall fall within the scope of the claims of the present application.

## Claims

1. A service processing method, wherein data of each user is separately stored on at least two servers, and the method comprises:
receiving, by a server, a service processing request, wherein the service processing request comprises a user identifier and a data identifier of data needed by a service;
determining whether there is data corresponding to the data identifier in data corresponding to the user identifier that is locally stored on the server; and
if yes, obtaining the locally stored data corresponding to the data identifier, and executing the service based on the obtained data; or
if no, obtaining the data corresponding to the data identifier from another server, and executing the service based on the obtained data.

2. The method according to claim 1, wherein the data identifier of the data needed by the service comprises a data volume of the data needed by the service; and the determining whether there is the data corresponding to the data identifier in data corresponding to the user identifier that is locally stored on the server comprises:
determining whether a data volume of the data corresponding to the user identifier that is locally stored on the server is not less than the data volume of the data needed by the service; and
if yes, determining that there is the data corresponding to the data identifier on the server; or
if no, determining that there is no data corresponding to the data identifier on the server.

3. The method according to claim 2, wherein the obtaining the data corresponding to the data identifier from another server comprises:
determining a difference between the data volume of the data needed by the service and the data volume of the data corresponding to the user identifier that is locally stored on the server; and
obtaining, from the another server, data corresponding to the user identifier and with a data volume being the difference.

4. The method according to claim 3, wherein the obtaining, from the another server, data corresponding to the user identifier and with a data volume being the difference comprises:
sequentially obtaining data corresponding to the user identifier that is on other servers in descending order of data volumes of the data, until an obtained data volume is the difference.

5. The method according to any one of claims 2 to 4, wherein the method further comprises:
updating, by the server, a total data volume of the data corresponding to the user identifier, the data volume of the data corresponding to the user identifier that is locally stored on the server, and the data volumes of the data corresponding to the user identifier that is stored on the other servers.

6. A service processing method, wherein a total balance of each user is divided into a plurality of sub-balances, and the plurality of sub-balances are separately stored on at least two servers, and the method comprises:
receiving, by a server, a service processing request, wherein the service processing request comprises a user identifier and an amount of money needed by a service;
determining whether a balance amount of a sub-balance corresponding to the user identifier that is locally stored on the server is not less than the amount of money; and
if yes, obtaining a locally stored sub-balance with the amount of money, and executing the service based on the obtained sub-balance; or
if no, obtaining sub-balances totaling the amount of money from the server and another server, and executing the service based on the obtained sub-balances.

7. The method according to claim 6, wherein the obtaining sub-balances totaling the amount of money from the server and another server comprises:
determining a difference between the amount of money and the balance amount of the sub-balance corresponding to the user identifier that is locally stored on the server; and
obtaining the whole sub-balance corresponding to the user identifier that is locally stored on the server, and obtaining a sub-balance with a balance amount being the difference from the another server.

8. The method according to claim 7, wherein the obtaining a sub-balance with a balance amount being the difference from the another server comprises:
sequentially obtaining sub-balances corresponding to the user identifier that are on other servers in descending order of balance amounts of the sub-balances, until an obtained balance amount is the difference.

9. The method according to any one of claims 6 to 8, wherein the method further comprises:
updating, by the server, a total balance corresponding to the user identifier, the balance amount of the sub-balance corresponding to the user identifier that is locally stored on the server, and the balance amounts of the sub-balances corresponding to the user identifier that are stored on the other servers.

10. A data storage method, wherein the method comprises:
obtaining data of each user;
dividing the data of the user into a plurality of data sets with the same data volume; and
separately storing the plurality of data sets on at least two servers, and storing, on each server, a user identifier of the user, a total data volume of the data of the user, a server identifier of each server, and a data volume of a data set stored on each server.

11. A data storage method, wherein the method comprises:
obtaining a total balance of each user;
equally dividing the total balance of the user into a plurality of sub-balances; and
separately storing the plurality of sub-balances on at least two servers, and storing, on each server, a user identifier of the user, the total balance of the user, a server identifier of each server, and a balance amount of a sub-balance stored on each server.

12. A service processing apparatus, wherein data of each user is separately stored on at least two servers, and the apparatus comprises:
a receiving module, configured to receive a service processing request, wherein the service processing request comprises a user identifier and a data identifier of data needed by a service;
a determining module, configured to determine whether there is the data corresponding to the data identifier in data corresponding to the user identifier that is locally stored on the apparatus; and
an execution module, configured to: when a determining result of the determining module is yes, obtain the locally stored data corresponding to the data identifier, and execute the service based on the obtained data; or when a determining result of the determining module is no, obtain the data corresponding to the data identifier from another server, and execute the service based on the obtained data.

13. The apparatus according to claim 12, wherein the data identifier of the data needed by the service comprises a data volume of the data needed by the service;
the determining module is configured to determine whether a data volume of the data corresponding to the user identifier that is locally stored on the apparatus is not less than the data volume of the data needed by the service; and
the execution module is configured to: when a determining result of the determining module is yes, determine that there is the data corresponding to the data identifier on the apparatus; or when a determining result of the determining module is no, determine that there is no data corresponding to the data identifier on the apparatus.

14. The apparatus according to claim 13, wherein the execution module is configured to: determine a difference between the data volume of the data needed by the service and the data volume of the data corresponding to the user identifier that is locally stored on the apparatus, and obtain, from the another server, data corresponding to the user identifier and with a data volume being the difference.

15. The apparatus according to claim 14, wherein the execution module is configured to sequentially obtain data corresponding to the user identifier that is on other servers in descending order of data volumes of the data, until an obtained data volume is the difference.

16. The apparatus according to any one of claims 13 to 15, wherein the apparatus further comprises:
an update module, configured to update a total data volume of the data corresponding to the user identifier, the data volume of the data corresponding to the user identifier that is locally stored on the apparatus, and the data volumes of the data corresponding to the user identifier that is stored on the other servers.

17. A service processing apparatus, wherein a total balance of each user is divided into a plurality of sub-balances, and the plurality of sub-balances are separately stored on at least two servers, and the apparatus comprises:
a receiving module, configured to receive a service processing request, wherein the service processing request comprises a user identifier and an amount of money needed by a service;
a determining module, configured to determine whether a balance amount of a sub-balance corresponding to the user identifier that is locally stored on the apparatus is not less than the amount of money; and
an execution module, configured to: when a determining result of the determining module is yes, obtain a locally stored sub-balance with the amount of money, and execute the service based on the obtained sub-balance; or when a determining result of the determining module is no, obtain sub-balances totaling the amount of money from the apparatus and another server, and execute the service based on the obtained sub-balances.

18. The apparatus according to claim 17, wherein the execution module is configured to determine a difference between the amount of money and the balance amount of the sub-balance corresponding to the user identifier that is locally stored on the apparatus, obtain the whole sub-balance corresponding to the user identifier that is locally stored on the apparatus, and obtain a sub-balance with a balance amount being the difference from the another server.

19. The apparatus according to claim 18, wherein the execution module is configured to sequentially obtain sub-balances corresponding to the user identifier that are on other servers in descending order of balance amounts of the sub-balances, until an obtained balance amount is the difference.

20. The apparatus according to any one of claims 17 to 19, wherein the apparatus further comprises:
an update module, configured to update a total balance corresponding to the user identifier, the balance amount of the sub-balance corresponding to the user identifier that is locally stored on the apparatus, and the balance amounts of the sub-balances corresponding to the user identifier that are stored on the other servers.

21. A data storage apparatus, wherein the apparatus comprises:
an acquisition module, configured to obtain data of each user;
a division module, configured to divide the data of the user into a plurality of data sets with the same data volume; and
a storage module, configured to separately store the plurality of data sets on at least two servers, and store, on each server, a user identifier of the user, a total data volume of the data of the user, a server identifier of each server, and a data volume of a data set stored on each server.

22. A data storage apparatus, wherein the apparatus comprises:
an acquisition module, configured to obtain a total balance of each user;
a division module, configured to equally divide the total balance of the user into a plurality of sub-balances; and
a storage module, configured to separately store the plurality of sub-balances on at least two servers, and store, on each server, a user identifier of the user, the total balance of the user, a server identifier of each server, and a balance amount of a sub-balance stored on each server.
